# EUROPEAN PATENT APPLICATION

(11) **EP 4 647 368 A1**
(43) Date of publication of application: **12.11.2025**
(21) Application number: 25726201.4
(22) Date of filing: 07.02.2025
(51) Int. Cl.: B65G 1/02

(54) **WAREHOUSING RACK AND WAREHOUSING SYSTEM**

(30) Priority: 28.03.2024 CN 202410378523
(71) Applicant: Hai Robotics Co., Ltd., Shenzhen, Guangdong 518000 (CN)
(72) Inventor: CHEN, Kai, Shenzhen, Guangdong 518000 (CN); SHAN, Mingming, Shenzhen, Guangdong 518000 (CN)
(74) Representative: Gulde & Partner
(86) International application number: PCT/CN2025/076191
(87) International publication number: WO 2025/200784

(57) **Abstract**

This application provides a warehousing shelving unit and a warehousing system, and relates to the field of warehousing and logistics technologies. The warehousing shelving unit includes a shelving unit body and a track assembly. The track assembly includes at least one connecting track, the connecting track has a connecting section and at least one extension section that are disposed along an extension direction of the shelving unit body, the connecting section is connected to the shelving unit body, the extension section is located on an outer side of the shelving unit body, and the at least one extension section and the outer side in the extension direction of the shelving unit body jointly form a maintenance area. In this application, the track assembly is disposed on the shelving unit body, so that the extension section of the connecting track is located on the outer side of the shelving unit body, thereby forming the maintenance area located on a side of the shelving unit body. In this way, when a shuttle or a robot needs to be installed and maintained, the shuttle or the robot may be moved to the maintenance area for operations. An operator can complete the installation and maintenance operations without entering an aisle between warehousing shelving units or climbing the shelving units, making the operations more convenient and quicker.

## Description

### CROSS-REFERENCES

This application claims priority to Chinese Patent Application No. 202410378523.3, filed with the China National Intellectual Property Administration on March 28, 2024 and entitled "WAREHOUSING SHELVING UNIT AND WAREHOUSING SYSTEM", which is incorporated herein by reference in its entirety.

### TECHNICAL FIELD

This application relates to the field of warehousing and logistics technologies, and in particular, to a warehousing shelving unit and a warehousing system.

### BACKGROUND OF THE INVENTION

Warehousing is an important part of a modern logistics process. Efficient and proper warehousing can implement effective control and management on logistics resources.

To improve a goods storage capability of a warehousing system, a plurality of warehousing shelving units are arranged at intervals, and aisles for movement of shuttles or robots are formed between the shelving units. A track is disposed on a side of the warehousing shelving unit facing the aisle, and a shuttle or a robot is connected to the track to move along an extension direction of the track, to place or retrieve goods, and to transport goods. Currently, because the aisle is only for accommodating the shuttle or the robot, during installing operation or maintaining operation of the shuttle or the robot, it is inconvenient for a ladder truck to enter the aisle, an operator needs to enter the aisle and climb to a target position to perform an operation.

However, it is difficult for the operator to perform the installing operation or maintaining operation at high altitudes in the narrow aisle, and operation space is limited, making it inconvenient to perform the installing operation or maintaining operation on the shuttle or the robot in the aisle.

### SUMMARY OF THE INVENTION

This application provides a warehousing shelving unit and a warehousing system, to resolve a problem that aisles of existing warehousing shelving units are narrow, making it inconvenient for an operator to perform installing operation or maintaining operation on a shuttle or a robot in an aisle.

According to an aspect, this application provides a warehousing shelving unit. The warehousing shelving unit includes a shelving unit body and a track assembly. The track assembly includes at least one connecting track, the connecting track has a connecting section and at least one extension section that are disposed along an extension direction of the shelving unit body. The connecting section is connected to the shelving unit body. The extension section is located on an outer side of the shelving unit body. The at least one extension section and the outer side in the extension direction of the shelving unit body jointly form a maintenance area.

In a possible implementation, according to the warehousing shelving unit provided in this application, the at least one connecting track includes a first track and a second track. The first track and the second track are distributed at an interval along a height direction of the shelving unit body.

In a possible implementation, according to the warehousing shelving unit provided in this application, the first track and the second track are located on a same side of the shelving unit body, and the first track is located above the second track.

In a possible implementation, according to the warehousing shelving unit provided in this application, the track assembly further includes at least one first link member. Two ends of the first link member are respectively connected to an extension section of the first track and a side of the shelving unit body facing the first track.

In a possible implementation, according to the warehousing shelving unit provided in this application, the quantity of first link members is at least two. Joints between the first link members and the extension section of the first track are sequentially disposed at intervals. Joints between the first link members and the shelving unit body are disposed at intervals.

In a possible implementation, according to the warehousing shelving unit provided in this application, the track assembly further includes at least one second link member. Two ends of the second link member are respectively connected to the extension section of the first track and a side of the shelving unit body away from the first track.

In a possible implementation, according to the warehousing shelving unit provided in this application, the quantity of second link members is at least two. Joints between the second link members and the shelving unit body are adjacent.

Joints between the second link members and the extension section of the first track are correspondingly disposed at joints between the first link members and the extension section of the first track.

In a possible implementation, according to the warehousing shelving unit provided in this application, the track assembly further includes at least one first connecting member and at least one second connecting member. At least one of the first link member and the second link member is connected to the shelving unit body through the first connecting member.

At least one of the first link member and the second link member is connected to the extension section of the first track through the second connecting member.

In a possible implementation, according to the warehousing shelving unit provided in this application, the first link member and the second link member are both connected to the extension section of the first track through the second connecting member.

In a possible implementation, according to the warehousing shelving unit provided in this application, the track assembly further includes at least one support member. The support member is connected to an extension section of the second track, and an end of the support member away from the second track is disposed on a placing surface for the shelving unit body.

In a possible implementation, according to the warehousing shelving unit provided in this application, the support member includes a strut and a strut seat, the strut is connected to the extension section of the second track and the strut seat, and the strut seat is disposed on the placing surface.

In a possible implementation, according to the warehousing shelving unit provided in this application, the strut seat has at least one connecting portion configured to connect with the placing surface.

In a possible implementation, according to the warehousing shelving unit provided in this application, the strut seat is fixedly mounted on the placing surface.

In a possible implementation, according to the warehousing shelving unit provided in this application, the strut is disposed vertically.

In a possible implementation, according to the warehousing shelving unit provided in this application, the track assembly further includes at least one limiting member. The limiting member is located at an end of the extension section away from the shelving unit body.

In a possible implementation, according to the warehousing shelving unit provided in this application, the track assembly further includes at least one buffer member. The buffer member is disposed on the limiting member, and the buffer member faces the shelving unit body.

In a possible implementation, according to the warehousing shelving unit provided in this application, the buffer member includes a collision block and an elastic telescopic portion. The collision block is connected to the limiting member through the elastic telescopic portion.

In a possible implementation, according to the warehousing shelving unit provided in this application, a length of the extension section of the first track is equal to that of the extension section of the second track.

In a possible implementation, according to the warehousing shelving unit provided in this application, the first track is provided with two extension sections. The two extension sections of the first track are respectively located at two ends of a connecting section of the first track.

The second track is provided with two extension sections. The two extension sections of the second track are respectively located at two ends of the connecting section of the second track.

In a possible implementation, the warehousing shelving unit provided in this application further includes a guardrail. The guardrail is connected to the shelving unit body, and the guardrail is disposed around an outer side of the maintenance area.

In a possible implementation, according to the warehousing shelving unit provided in this application, the guardrail has a doorway.

A door is arranged on the doorway to open or close the doorway.

According to another aspect, this application provides a warehousing system, the warehousing system includes a conveyor line and the warehousing shelving unit according to any one of the above, where at least one side of the warehousing shelving unit is provided with an extension section, and the conveyor line is located on a side of the at least one extension section.

According to the warehousing shelving unit and the warehousing system provided in this application, the track assembly is disposed on the shelving unit body of the warehousing shelving unit, and the track assembly includes the connecting section and the extension section, so that the extension section of the connecting track is located on the outer side of the shelving unit body, and thus the extension section and the outer area of the shelving unit body in the direction form the maintenance area located on a side of the shelving unit body. In this way, when a shuttle or a robot needs to be installed or maintained, the shuttle or the robot may be moved to the maintenance area for operations. In this case, the shuttle or the robot is located outside an aisle, and an operator can complete the installing operation or the maintaining operation without entering the aisle between the warehousing shelving units or climbing the shelving units, and without being affected by the narrow aisle, making it more convenient and quicker for the operator to perform the installing operation or the maintaining operation on the shuttle and the robot.

### BRIEF DESCRIPTION OF DRAWINGS

To describe the technical solutions of the embodiments of this application or the related art more clearly, the accompanying drawings required for describing the embodiments or the related art are briefly introduced below. Apparently, the accompanying drawings in the following descriptions show some embodiments of this application, and a person of ordinary skill in the art may still derive other drawings from these accompanying drawings without creative efforts.
FIG. 1 is a first schematic structural diagram of a warehousing shelving unit according to some embodiments of this application;
FIG. 2 is a schematic structural diagram showing a first track of a warehousing shelving unit according to some embodiments of this application;
FIG. 3 is a schematic structural diagram showing a second track of a warehousing shelving unit according to some embodiments of this application;
FIG. 4 is a second schematic structural diagram of a warehousing shelving unit according to some embodiments of this application;
FIG. 5 is a third schematic structural diagram of a warehousing shelving unit according to some embodiments of this application;
**FIG.** 6 is a diagram of a usage status of the warehousing shelving unit in FIG. 1;
FIG. 7 is a diagram of a usage status of a warehousing shelving unit in a warehousing system according to an embodiment of this application;
FIG. 8 is a first schematic structural diagram of the warehousing shelving unit being docked with a conveyor line in the warehousing system in FIG. 7; and
FIG. 9 is a second schematic structural diagram of the warehousing shelving unit being docked with a conveyor line in the warehousing system in FIG. 7.

In the drawings:
100: Shelving unit body; 101: Aisle;
200: Track assembly; 201: Maintenance area;
210: Connecting track; 211: First track; 2111: First extension section; 2112: First connecting section; 212: Second track; 2121: Second connecting section; 2122: Second extension section;
220: First link member;
230: Second link member;
240: First connecting member; 250: Second connecting member;
260: Support member; 261: Strut; 262: Strut seat;
270: Limiting member;
280: Buffer member; 281: Collision block; 282: Elastic telescopic portion;
300: Guardrail;
310: Door; 311: Doorway;
400: Robot;
500: Goods container; and
600: Conveyor line.

### DETAILED DESCRIPTION

To make the objectives, technical solutions, and advantages of this application clearer, the technical solutions in the embodiments of this application will be described in more detail below in conjunction with the accompanying drawings in the preferred embodiments of this application. In the accompanying drawings, the same or similar reference numerals throughout represent the same or similar components or components having the same or similar functions. The described embodiments are some rather than all of the embodiments of this application. The embodiments described below with reference to the accompanying drawings are exemplary, and are intended to explain this application rather than being construed as limitation to this application. All other embodiments obtained by a person of ordinary skill in the art based on the embodiments of this application without creative efforts shall fall within the protection scope of this application. The embodiments of this application are described below with reference to the accompanying drawings.

In the descriptions of this application, it should be noted that, unless explicitly specified and limited otherwise, the terms "installed", "connected", and "connection" should be understood in a broad sense and may be used interchangeably. For example, "connection" may be a direct connection or an indirect connection through an intermediate medium, and may be a fixed connection or a sliding connection. A person of ordinary skill in the art may understand specific meanings of the foregoing terms in this application according to specific situations.

In the descriptions of this application, it should be understood that orientation or position relationships indicated by the terms such as "upper", "lower", "front", "back", "vertical", "horizontal", "top", "bottom", "inner", and "outer" are based on orientation or position relationships shown in the accompanying drawings, and are used only for ease of describing this application and brevity of illustration, rather than indicating or implying that the mentioned apparatus or element needs to have a particular orientation or needs to be constructed and operated in a particular orientation. Therefore, such terms should not be construed as limitation to this application.

In the specification, claims, and accompanying drawings of this application, the terms such as "first", "second", and "third" are intended to distinguish between similar objects, but do not necessarily indicate a specific order or sequence. It should be understood that the term used in such a way are interchangeable in appropriate circumstances, so that the embodiments of this application described herein can be implemented in orders other than the order illustrated or described herein.

Moreover, the terms "include", "have" and any other variants mean to cover the non-exclusive inclusion, for example, a process, method, system, product, or display that includes a list of steps or modules is not necessarily limited to clearly listed steps or modules, but may include other steps or modules not clearly listed or inherent to such a process, method, product, or display.

In an existing warehousing system, a plurality of warehousing shelving units are usually arranged at intervals, and an aisle for a shuttle or a robot to move may be formed between two adjacent warehousing shelving units. To fully use shelving unit placement space of the warehousing system and increase a maximum capacity of the warehousing system, a width of an aisle between warehousing shelving units is controlled to allow only movement of a shuttle or a robot, so as to place as many warehousing shelving units as possible.

At least one of warehousing shelving units on two sides of an aisle is provided with a track facing the aisle, and the shuttle or the robot is connected to the track, so that the shuttle or the robot smoothly moves in the aisle and can place or retrieve a goods container, and transport the goods container.

Due to the foregoing limitation of the width of the aisle, it is usually difficult for a ladder truck to drive into the aisle and push an operator to a proper position of the shuttle or the robot to perform a repairing operation. Currently, when installing operation or maintaining operation needs to be performed on the shuttle or the robot, the operator further needs to enter the aisle and climb to a proper position to perform the operation.

In addition, it is also difficult for the operator to perform the installing operation or maintaining operation on the shuttle or the robot in the aisle. Consequently, it is difficult for the operator to perform the installing operation or maintaining operation at high altitudes in the narrow aisle, and operation space is limited.

As a result, it is inconvenient to perform installing operation or maintaining operation on the shuttle or the robot in the aisle.

Based on this, this application provides a warehousing shelving unit and a warehousing system. A track assembly is disposed on a side of a shelving unit body. The track assembly has at least one extension section located on an outer side of the shelving unit body. The extension section can form a maintenance area outside an aisle of the warehousing system, so that an operator can install or maintain a shuttle or a robot without entering the aisle, making the installation or maintenance of the shuttle or the robot more convenient and quicker.

The following describes the content of the present invention in detail with reference to the accompanying drawings, so that a person skilled in the art can understand the content of the present invention more clearly and in detail.

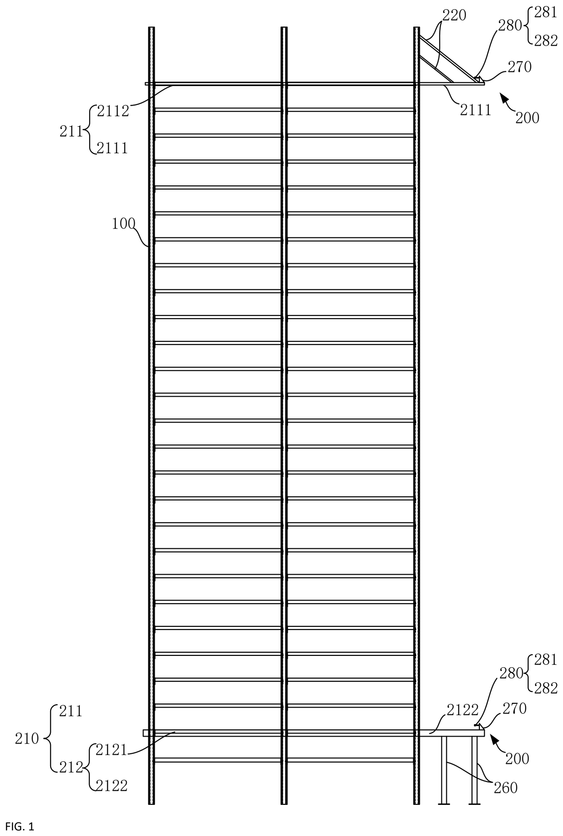

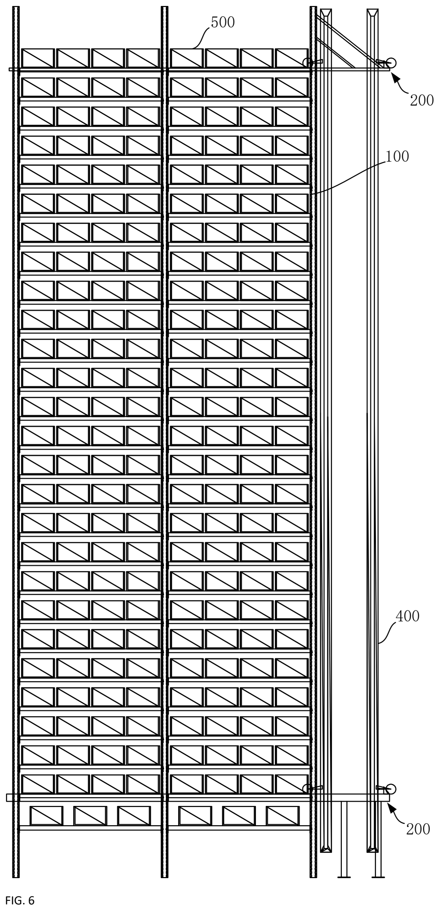

As shown in FIG. 1, and FIG. 4 to FIG. 6, according to an aspect, an embodiment of this application provides a warehousing shelving unit, including a shelving unit body 100 and a track assembly 200. The track assembly 200 includes at least one connecting track 210. The connecting track 210 has a connecting section and at least one extension section that are disposed along an extension direction of the shelving unit body 100. The connecting section is connected to the shelving unit body 100. The extension section is located on an outer side of the shelving unit body 100. The at least one extension section and the outer side in the extension direction of the shelving unit body 100 jointly form a maintenance area 201.

It can be understood that the shelving unit body 100 is a conventional shelving unit, and defines a plurality of storage positions sequentially distributed at intervals configured to store goods containers 500 . A plurality of shelving unit bodies 100 are sequentially disposed at intervals in the warehousing system. An interval between the shelving unit bodies 100 forms an aisle 101. A width of the aisle 101 corresponds to a distance between the two adjacent shelving unit bodies 100. A length of the aisle 101 corresponds to a length of the shelving unit body 100.

At least one of the shelving unit bodies 100 on two sides of the aisle 101 is provided with a track assembly 200. The track assembly 200 is connected to a shuttle or a robot 400, so that the shuttle or the robot 400 moves in the aisle 101 along the track assembly 200. The track assembly 200 provided in this embodiment includes at least one connecting track 210 disposed on a side of the shelving unit body 100. During specific implementation, at least one connecting track 210 may be disposed on only one side of the shelving unit body 100, or one or more connecting tracks 210 may be disposed on two sides of the shelving unit body 100, so that one shelving unit body 100 has connecting tracks 210 in aisles 101 on two sides of the shelving unit body 100.

The connecting track 210 includes a connecting section and at least one extension section. The connecting section is connected to the shelving unit body 100, and a specific set length of the connecting section may be consistent with the length of the shelving unit body 100. The extension section is disposed at at least one end of the connecting section. Specifically, one extension section may be disposed only at one end of the connecting section, or extension sections may be disposed at two ends of the connecting section, so that the extension section is located on an outer side of the shelving unit body 100. During specific implementation, the extension section and the connecting section may be integrally formed, or may be separately processed and then connected. This is not limited in this application. However, it should be ensured that track of the connecting section matches the track of the extension section, to avoid interference with movement of the shuttle or robot 400.

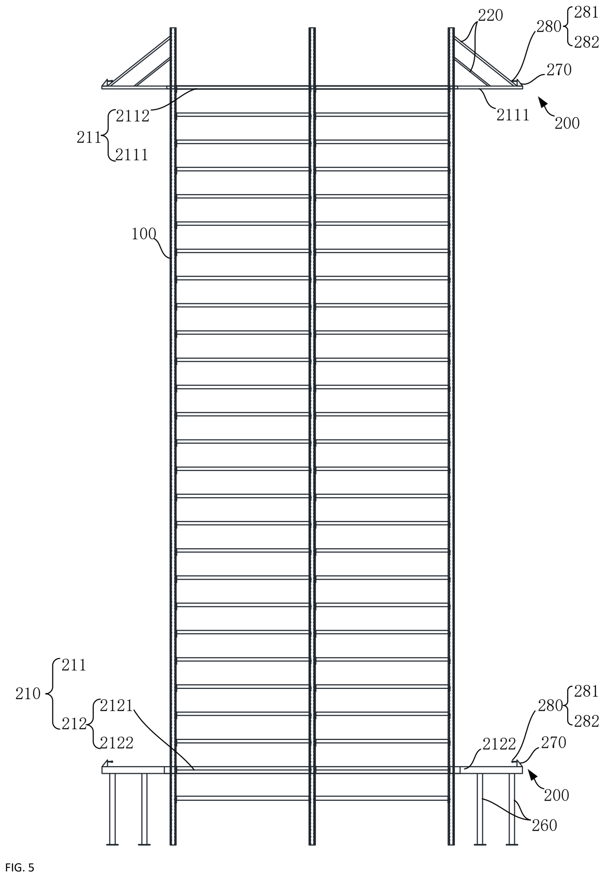

For example, the shelving unit body 100 includes two shuttles or robots 400. When the two shuttles or robots 400 need to be installed or maintained at the same time, to improve efficiency of installation or maintenance operation, as shown in FIG. 5, first extension sections 2111 are disposed at two ends of a first connecting section 2112, and second extension sections 2122 are disposed at two ends of a second connecting section 2121, to form maintenance areas 201 at two sides of the shelving unit body 100. One of the shuttles or robots 400 may be moved to the maintenance area 201 on one side of the shelving unit body 100 for installation or maintenance, and the other shuttle or robot 400 is moved to the maintenance area 201 on the other side of the shelving unit body 100 for installation or maintenance, so that installation or maintenance can be performed on a plurality of shuttles or robots 400 on the shelving unit body 100 at the same time without interfering with each other and can be performed at the same time, thereby improving operation efficiency.

Therefore, at least one extension section connected to the connecting section is disposed on the outer side of the shelving unit body 100, so that the extension section and a space region on the outer side of the shelving unit body 100 on which the extension section is located jointly form the maintenance area 201, that is, the maintenance area 201 is located outside the aisle 101. When the shuttle or robot 400 needs to be installed or maintained, the shuttle or robot 400 may be moved to the maintenance area 201 for operations. In this case, the shuttle or robot 400 is also located outside the aisle 101, without being interfered with by the shelving unit bodies 100 at two sides of the narrow aisle 101. An operator can complete the installation or maintenance operation without entering the aisle 101 between the warehousing shelving units or climbing the shelving units, making it more convenient and quicker for the operator to perform the installation or maintenance operation on the shuttle or robot 400.

In some embodiments, as shown in FIG. 1 to FIG. 6, the at least one connecting track 210 of the warehousing shelving unit includes a first track 211 and a second track 212. At least one first track 211 is disposed, and the first track 211 and the second track 212 are distributed at an interval along a height direction of the shelving unit body 100. The first track 211 specifically has a first connecting section 2112 and a first extension section 2111, and the second track 212 specifically has a second connecting section 2121 and a second extension section 2122.

It may be understood that, to ensure a capability of placing or retrieving the goods container 500, the existing shuttle or robot 400 needs to move along a length direction of the aisle 101, that is, along a length direction of the shelving unit body 100. The robot 400 or a pickup mechanism of the robot 400 needs to move along the height direction of the shelving unit body 100, to place or retrieve the goods container 500 between storage positions of different levels. The first track 211 and the second track 212 are disposed at an interval along the height direction of the shelving unit body 100, so that the shuttle or robot 400 can move stably.

Specifically, a distance between the first track 211 and the second track 212 usually depends on a distance between a highest level and a lowest level of the shelving unit body 100. This is not limited in this application.

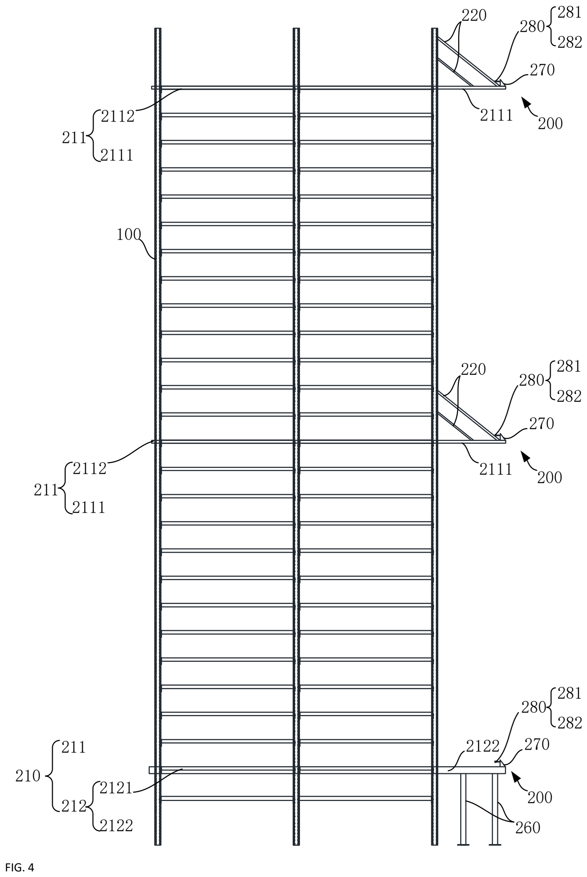

In another embodiment, according to a specific requirement, as shown in FIG. 4, a quantity of first tracks 211 connected to the shelving unit body 100 may be increased, to adapt to shuttles or robots 400 of different heights. When a shuttle or robot 400 with a large height needs to be installed on the shelving unit body 100, if the first track 211 and the second track 212 are respectively disposed only at an upper portion and a lower portion of the shelving unit body 100, a middle portion of the shelving unit body 100 may lack effective support for the shuttle or robot 400, resulting in poor stability of the shuttle or robot 400. In view of this, as shown in FIG. 4, one second track 212 is disposed at the lower portion of the shelving unit body 100, and one first track 211 is disposed at each of the middle portion and the upper portion of the shelving unit body 100, so that the three tracks are evenly distributed at intervals. In this way, the two first tracks 211 and the one second track 212 that are evenly distributed at intervals on the shelving unit body 100 can provide support for different portions of the shuttle or robot 400 in the height direction, thereby improving stability of the shuttle or robot 400 during installation, maintenance, and subsequent running.

Further, as shown in FIG. 1, FIG. 4, and FIG. 5, the first track 211 and the second track 212 are located on a same side of the shelving unit body 100, and the first track 211 is located above the second track 212.

The first track 211 and the second track 212 are disposed on the same side of the shelving unit body 100, so that the first track 211 and the second track 212 are jointly connected to and support the shuttle or robot 400. In this way, a goods placing or retrieval capability of the shuttle or robot 400 is ensured. Moreover, a stable and reliable connection between the shuttle or robot 400 and the shelving unit body 100 is also ensured, avoiding derailment and falling.

Therefore, as shown in FIG. 1, FIG. 2, and FIG. 6, in some embodiments, to facilitate the connection between the first extension section 2111 of the first track 211 and the shelving unit body 100, the track assembly 200 further includes at least one first link member 220. Two ends of the first link member 220 are respectively connected to the extension section of the first track 211 and the shelving unit body 100. For example, one end of the first link member 220 may be connected to a column of the shelving unit body 100 close to the first track 211, for example, connected to a side of the shelving unit body 100 facing the first track 211.

Because the first connecting section 2112 of the first track 211 is next to the shelving unit body 100, the first connecting section 2112 may be fixedly mounted to a side of the shelving unit body 100 directly by using bolts or other fasteners. In this case, the first extension section 2111 of the first track 211 is located at the upper portion of the shelving unit body 100, and is wholly suspended from the shelving unit body 100. If there is a lack of effective support, the first extension section 2111 may be easily twisted or even damaged under the action of gravity and other pressures of the shuttle or robot 400. Therefore, it is necessary to dispose the first link member 220, so that the first extension section 2111 is connected to the shelving unit body 100 through the first link member 220. As a pull rod, the first link member 220 bears a pressure exerted by the first extension section 2111 and the shuttle or robot 400 connected to the first extension section 2111, and keeps the first extension section 2111 stable.

In this embodiment, the first link member 220 is disposed above the first extension section 2111 to serve as a pull rod. In other embodiments, the first link member 220 may be partly disposed below the first extension section 2111 to serve as a push rod, and also provides stable and reliable support for the first extension section 2111. This is not limited in this application.

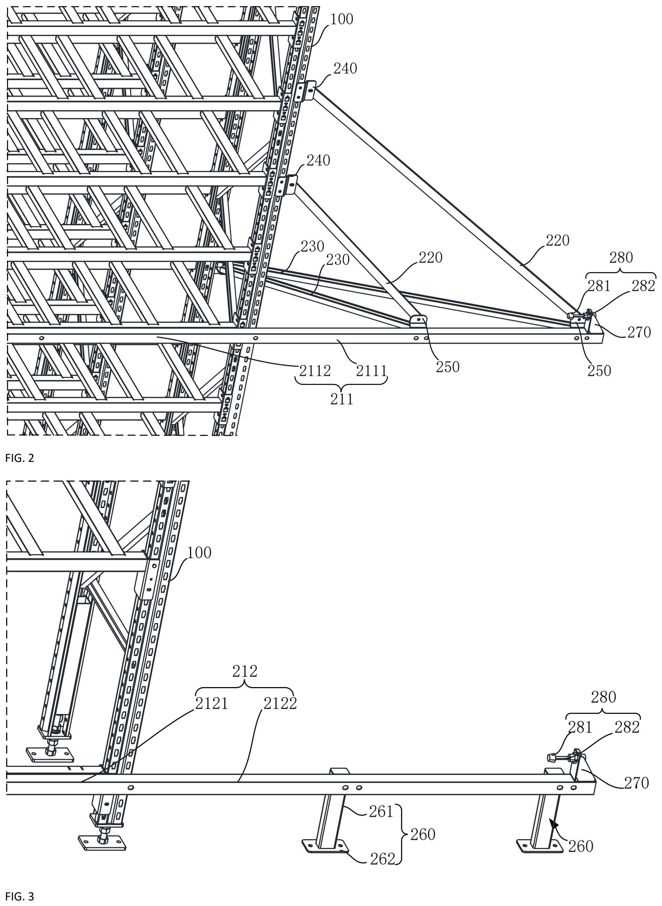

During specific implementation, the quantity of first link member 220 may be one, two, or more. By way of example and not limitation, in FIG. 1 and FIG. 2, there are two first link members 220, joints between the two first link members 220 and the extension section of the first track 211 are sequentially disposed at intervals, and joints between the first link members 220 and the shelving unit body 100 are sequentially disposed at intervals according to an interval sequence of the joints between the first link members 220 and the extension section of the first track 211.

In this way, the plurality of first link members 220 provide a plurality of support points for the first extension section 2111, so that a pulling effect is more stable and reliable, avoiding obvious deflection deformation of the first extension section 2111 in a vertical direction.

Further, as shown in FIG. 1 and FIG. 2, in some embodiments, the track assembly 200 further includes at least one second link member 230. Two ends of the second link member 230 are respectively connected to the extension section of the first track 211 and a side of the shelving unit body 100 away from the first track 211.

It may be understood that, the first link member 220 is connected to the first extension section 2111 and the side of the shelving unit body 100 close to the first track 211, and the second link member 230 is connected to the first extension section 2111 and the side of the shelving unit body 100 away from the first track 211, so that the second link member 230 provides auxiliary reinforcing support for the first extension section 2111 from another direction different from a support direction of the first link member 220, thereby further ensuring structural stability and reliability of the first extension section 2111.

In this embodiment, the second link member 230 is configured to be basically in a same horizontal plane as the first extension section 2111, to prevent the first extension section 2111 from bending in a horizontal direction. In another embodiment, an end of the second link member 230 that is not connected to the first extension section 2111 may alternatively be moved up or down correspondingly, so that the second link member 230 provides inclined support for the first extension section 2111. This is not limited in this application.

During specific implementation, the quantity of the second link member 230 may be one, two, or more. By way of example and not limitation, in FIG. 1 and FIG. 2, there are two second link members 230, and joints between the second link members 230 and the shelving unit body 100 are adjacent. Joints between the second link members 230 and the extension section of the first track 211 are correspondingly disposed at the joints between the first link members 220 and the extension section of the first track 211.

It may also be understood that the plurality of second link members 230 are disposed, so that the structure of the first extension section 2111 is more stable and reliable. The joints between the second link members 230 and the first extension section 2111 and the joints between the first link members 220 and the first extension section 2111 are correspondingly disposed at same positions, so that the structure of the track assembly 200 is more compact.

In another embodiment, the joints between the second link member 230 and the shelving unit body 100 may alternatively be disposed at intervals, or the joints between the second link members 230 and the first extension section 2111 and the joints between the first link members 220 and the first extension section 2111 may be disposed at intervals. This is not limited in this application.

In some embodiments, as shown in FIG. 2, the track assembly 200 further includes at least one first connecting member 240 and at least one second connecting member 250. At least one of the first link member 220 and the second link member 230 is connected to the shelving unit body 100 through the first connecting member 240. At least one of the first link member 220 and the second link member 230 is connected to the extension section of the first track 211 through the second connecting member 250.

In this way, the connections between the first link member 220 and the first extension section 2111 or the shelving unit body 100, and between the second link member 230 and the first extension section 2111 or the shelving unit body 100, are more stable and reliable, and subsequent replacement or maintenance of a single first link member 220 and a single second link member 230 are facilitated.

In this embodiment, the first connecting member 240 and the second connecting member 250 are both Z-shaped bending pieces. Mounting holes are provided at two ends of the bending piece, so that bolts may be used to pass through the first link member 220 or the second link member 230, and the mounting holes on one side of the first connecting member 240 for fixing, and bolts may be used to pass through the mounting holes on the other side of the first connecting member 240 and the shelving unit body 100 for fixing, to implement a fixed connection between the first link member 220 or the second link member 230 and the shelving unit body 100. Similarly, bolts are used to connect the second connecting member 250 to the first link member 220 or the second link member 230, and connect the second connecting member 250 to the first extension section 2111, to implement a fixed connection between the first link member 220 or the second link member 230 and the first extension section 2111.

As shown in FIG. 2, by way of example and not limitation, the first link member 220 and the second link member 230 are both connected to the extension section of the first track 211 through the second connecting member 250, and the first link member 220 and the second link member 230 correspondingly share the same second connecting member 250.

In this way, the first link member 220 and the second link member 230 correspondingly share the same second connecting member 250, so that the quantity of second connecting members 250 disposed can be reduced, thereby simplifying the structure of the track assembly 200 and improving installation and maintenance efficiency of the track assembly 200.

In some embodiments, as shown in FIG. 1 and FIG. 3, the second extension section 2122 of the second track 212 is suspended from the shelving unit body 100, and is located at the lower portion of the shelving unit body 100 and close to a placing surface for the shelving unit body 100. The track assembly 200 further includes at least one support member 260. The support member 260 is connected to the extension section of the second track 212. An end of the support member 260 away from the second track 212 is configured to abut against the placing surface for the shelving unit body 100 or be fixed on the placing surface.

Therefore, stable and reliable support may be directly formed between the placing surface for the shelving unit body 100 and the second extension section 2122 by using the support member 260, to avoid bending or deformation of the second extension section 2122. In addition, the entire structure is simple and compact.

Specifically, as shown in FIG. 3, the support member 260 includes a strut 261 and a strut seat 262. The strut 261 is connected to the extension section of the second track 212 and the strut seat 262. In an embodiment, the strut seat 262 is configured to abut against the placing surface, and the strut seat 262 is directly placed on the placing surface. In another embodiment, the strut seat 262 has at least one connecting portion configured to connect with the placing surface, and the connecting portion may be fixedly mounted on the placing surface through a fixing member.

It may be understood that, in this way, a strut may be used to provide effective support for the second extension section 2122, the strut seat 262 is disposed at an end of the strut 261 away from the second extension section 2122, and the connecting portion connected to the placing surface is disposed on the strut seat 262, to further improve stability of the support member 260, thereby ensuring a support effect for the second extension section 2122.

The connecting portion may be specifically a through hole provided on the strut seat 262, and the strut seat 262 may be fixed on the placing surface by using a bolt passing through the through hole.

Further, the strut 261 is disposed vertically, so that the strut 261 provides support for the second extension section 2122 along an extension direction of the strut 261. As a result, the support effect is more stable.

In addition, as shown in FIG. 1 to FIG. 6, in some embodiments, the track assembly 200 further includes at least one limiting member 270. The limiting member 270 may be disposed on at least one of the first track 211 and the second track 212. The limiting member 270 is located at an end of the extension section of at least one of the first track 211 and the second track 212, which is away from the shelving unit body 100.

The limiting member 270 is disposed, to prevent the shuttle or robot 400 from derailing from the extension section when moving on the extension section, thereby effectively limiting a movement range of the shuttle or robot 400, and ensuring safety of the shuttle or robot 400.

The limiting member 270 may be specifically an elastic block, for example, a wedge block or a rectangular block, that forms a stopping block on the first extension section 2111 or the second extension section 2122. This is not limited in this application. Disposing the limiting member 270 as the elastic block can prevent the shuttle or robot 400 from being damaged due to a rigid collision caused when the limiting member 270 limits the shuttle or robot 400.

Further, as shown in FIG. 1 to FIG. 6, the track assembly 200 further includes at least one buffer member 280. The buffer member 280 is correspondingly disposed on the limiting member 270, and the buffer member 280 faces the shelving unit body 100.

In this way, when the shuttle or robot 400 moves to the limiting member 270, that is, is stopped by the limiting member 270, the shuttle or robot 400 first comes into contact with the buffer member 280. The buffer member 280 is used to reduce a moving speed of the shuttle or robot 400, to reduce an impact force received by the shuttle or robot 400 when stopped, thereby further protecting the shuttle or robot 400.

It should be noted that when the buffer member 280 is disposed, the buffer member 280 first comes into contact with the shuttle or robot 400. Therefore, the limiting member 270 may be correspondingly disposed as a rigid member and rigidly and fixedly connected to the buffer member 280, and only the buffer member 280 is used to buffer the shuttle or robot 400.

During specific implementation, the buffer member 280 includes a collision block 281 and an elastic telescopic portion 282. The collision block 281 is connected to the limiting member 270 through the elastic telescopic portion 282.

The collision block 281 may be specifically a rubber block. The elastic telescopic portion 282 may be a telescopic rod with coaxial sliding sleeve connection. A coil spring is disposed inside or outside the rod. Two ends of the coil spring respectively abut against the collision block 281 and the limiting member 270. In this way, the telescopic rod is driven to lengthen or shorten through elastic expansion or contraction of the coil spring, to shorten when in contact with the shuttle or robot 400 to reduce the moving speed of the shuttle or robot 400, and lengthen when out of contact with the shuttle or robot 400 to reset.

In some other embodiments, as shown in FIG. 1, and FIG. 4 to FIG. 6, a length of the extension section of the first track 211 is equal to that of the extension section of the second track 212. In this way, the structure of the track assembly 200 is more compact and neater, and unnecessary waste of workpieces caused by an excessively long first extension section 2111 or second extension section 2122 can be avoided.

During specific implementation, the length of the first extension section 2111 and the length of the second extension section 2122 may be controlled to be in a range of 1.0 m to 1.5 m, and a specific length may be set according to a size of the correspondingly connected shuttle or robot 400, as long as the length is adapted to the size.

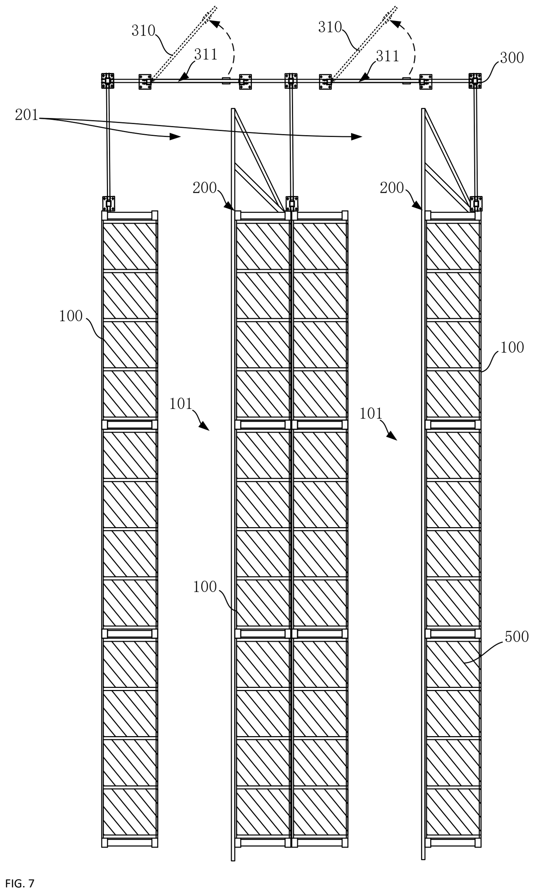

In addition, as shown in FIG. 7, the warehousing shelving unit provided in embodiments of this application further includes a guardrail 300. The guardrail 300 is connected to the shelving unit body 100. The guardrail 300 is disposed around an outer side of the maintenance area 201.

A clear boundary of the maintenance area 201 can be obtained through division by the guardrail 300, to prevent a non-operator from entering the maintenance area 201 by mistake and affecting the installation or maintenance operations of the operator on the shuttle or robot 400, so that the operations are safer and more standardized.

During specific implementation, the guardrail 300 has a doorway 311, and the maintenance area 201 is in communication with the outside through the doorway 311. A door 310 is arranged on the doorway 311, to open or close the doorway 311. In this way, it is convenient for the operator to enter and exit the maintenance area 201 from the doorway 311, reducing detours, and effectively ensuring safety of the aisle 101 and the maintenance area 201 within operation time.

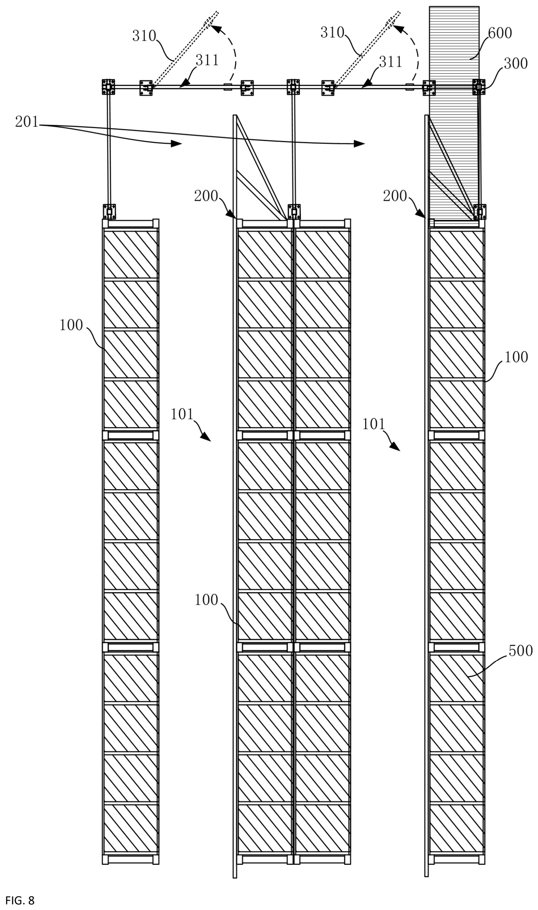

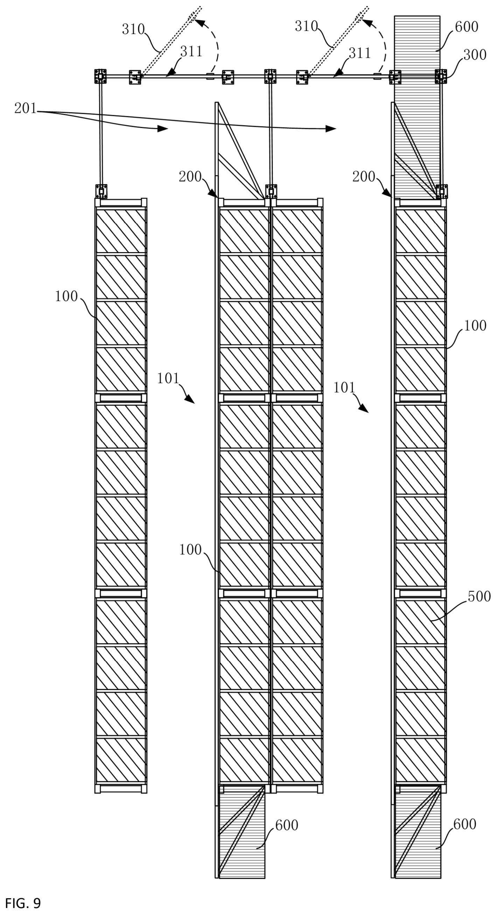

According to an other aspect, as shown in FIG. 8 and FIG. 9, an embodiment of this application further provides a warehousing system, including a conveyor line 600 and the warehousing shelving unit according to any one of the foregoing embodiments. The conveyor line 600 is located on a side of the extension section of the warehousing shelving unit, to dock with the robot 400 to implement placing or retrieval of the goods container 500.

The warehousing shelving unit is described in detail in the foregoing embodiments, and details are not described herein again.

The conveyor line 600 is disposed, to facilitate the robot 400 to place or retrieve the goods container 500 between the conveyor line 600 and the shelving unit body 100. For example, the robot 400 moves to the conveyor line 600 through the extension section, picks the goods container 500 on the conveyor line 600, and then moves to the connecting section along the extension section, to place the goods container 500 on the shelving unit body 100. Alternatively, the robot 400 retrieves the goods container 500 placed on the shelving unit body 100 and moves to the conveyor line 600 along the extension section, to place the goods container 500 on the conveyor line 600.

In extension directions of two ends of the shelving unit body 100, only one extension section may be disposed at one of the two ends, or each of the two ends is provided with an extension section. When there is only one extension section on the shelving unit body 100, the conveyor line 600 may be disposed corresponding to the extension section, so that the conveyor line 600 docks with the robot 400 running on the extension section to implement placing or retrieval of the goods container 500, and the maintenance area is formed around the extension section. When an extension section is disposed in each of the extension directions of the two ends of the shelving unit body 100, the conveyor line 600 may be correspondingly disposed at one of the extension sections, and the maintenance area is formed at the other extension section. Alternatively, the conveyor line 600 and the maintenance area are disposed at each of the two extension sections. Alternatively, the maintenance area is disposed at each of the two extension sections, and the conveyor line 600 is disposed corresponding to one of the extension sections. This is not limited in this application.

For example, as shown in FIG. 8, only one end of the shelving unit body 100 is provided with the extension section, and the conveyor line 600 may be disposed at the end of the shelving unit body 100 corresponding to the extension section. In this case, the maintenance area is formed on a left side of the extension section in FIG. 8, and the conveyor line 600 is located on a right side of the extension section and is adjacent to the shelving unit body 100. Because the maintenance area and the conveyor line 600 are respectively located on the left and right sides of the extension section, the conveyor line 600 does not interfere with the maintenance area, and the robot 400 may be repaired, or place or retrieve the goods container 500, according to a specific requirement.

Similarly, as shown in FIG. 9, extension sections are provided at two ends of the shelving unit body 100. In the two extension sections corresponding to a left aisle 101 in FIG. 9, only one of the two extension sections is provided with a conveyor line 600, for the robot 400 to place or retrieve the goods container 500, and the other extension section is used only as a maintenance area, to provide an area for performing installation and maintenance on the robot 400. In this way, functions of the two extension sections are independent.

The conveyor line 600 is disposed at each of two extension sections corresponding to a right aisle 101 in FIG. 9. Similarly, because the maintenance area and the conveyor line 600 are located at left and right sides of the extension section, the maintenance area and the conveyor line 600 do not interfere with each other, so that the extension sections at two ends of the shelving unit body 100 can both implement docking between the robot 400 and the conveyor line 600, to implement placing or retrieval of the goods container 500. In addition, installation or maintenance of the robot 400 can be further implemented at one of the extension sections. Further, on this basis, the two conveyor lines 600 may be further divided according to functions. For example, one of the conveyor lines 600 is only used by the robot 400 to pick up the goods container 500 on the conveyor line 600, and the other conveyor line 600 is only used by the robot 400 to place the goods container 500 on the conveyor line 600, thereby implementing unidirectional transfer of the goods container 500.

In conclusion, according to the warehousing shelving unit and the warehousing system provided in embodiments of this application, the track assembly 200 is disposed on the shelving unit body 100 of the warehousing shelving unit, and the connecting track 210 of the track assembly 200 includes at least one first track 211 and the second track 212. The first track 211 includes the first connecting section 2112 and at least one first extension section 2111. The second track 212 includes the second connecting section 2121 and at least one second extension section 2122. The first extension section 2111 and the second extension section 2122 are located on the outer side of the shelving unit body 100, to form, together with the outer area of the shelving unit body 100 in the direction, the maintenance area 201 located on a side of the shelving unit body 100.

When the shuttle or robot 400 needs to be installed or maintained, the shuttle or robot 400 may be moved to the maintenance area 201 manually or automatically by a motor for operations. In this case, the shuttle or robot 400 is located outside the aisle 101, and the operator can complete the installation or maintenance operations without entering the aisle 101 between the warehousing shelving units or climbing the shelving unit body 100 and without being affected by the narrow aisle 101, which could make it more convenient and quicker for the operator to perform the installation or maintenance operations on the shuttle and robot 400.

Finally, it should be noted that the foregoing embodiments are merely used for describing the technical solutions of this application, but are not intended to limit this application. Although this application is described in detail with reference to the foregoing embodiments, It should be understood by a person of ordinary skill in the art that modifications can be made to the technical solutions described in the foregoing embodiments, or equivalent replacements can be made to some or all of the technical features in the technical solutions; and such modifications or replacements will not cause the essence of corresponding technical solutions to depart from the scope of the technical solutions in the embodiments of this application.

## Claims

1. A warehousing shelving unit, comprising:
a shelving unit body, and
a track assembly comprising at least one connecting track, the connecting track having a connecting section and at least one extension section that are disposed along an extension direction of the shelving unit body;
wherein the connecting section is connected to the shelving unit body, the extension section is located on an outer side of the shelving unit body, and the at least one extension section and the outer side in the extension direction of the shelving unit body jointly form a maintenance area.

2. The warehousing shelving unit according to claim 1, wherein the at least one connecting track comprises a first track and a second track, and the first track and the second track are distributed at an interval along a height direction of the shelving unit body.

3. The warehousing shelving unit according to claim 2, wherein the first track and the second track are located on a same side of the shelving unit body, and the first track is located above the second track.

4. The warehousing shelving unit according to claim 2, wherein the track assembly further comprises at least one first link member, and two ends of the first link member are respectively connected to an extension section of the first track and a side of the shelving unit body facing the first track.

5. The warehousing shelving unit according to claim 4, wherein the quantity of first link members is at least two, joints between the first link members and the extension section of the first track are sequentially disposed at intervals, and joints between the first link members and the shelving unit body are disposed at intervals.

6. The warehousing shelving unit according to claim 4, wherein the track assembly further comprises at least one second link member, and two ends of the second link member are respectively connected to the extension section of the first track and a side of the shelving unit body away from the first track.

7. The warehousing shelving unit according to claim 6, wherein the quantity of second link members is at least two, and joints between the second link members and the shelving unit body are adjacent; and
joints between the second link members and the extension section of the first track are disposed at joints between the first link members and the extension section of the first track.

8. The warehousing shelving unit according to claim 6, wherein the track assembly further comprises at least one first connecting member and at least one second connecting member, and at least one of the first link member and the second link member is connected to the shelving unit body through the first connecting member; and
at least one of the first link member and the second link member is connected to the extension section of the first track through the second connecting member.

9. The warehousing shelving unit according to claim 8, wherein the first link member and the second link member are both connected to the extension section of the first track through the second connecting member.

10. The warehousing shelving unit according to claim 2, wherein the track assembly further comprises at least one support member, the support member is connected to an extension section of the second track, and an end of the support member away from the second track is disposed on a placing surface for the shelving unit body.

11. The warehousing shelving unit according to claim 10, wherein the support member comprises a strut and a strut seat, the strut is connected to the extension section of the second track and the strut seat, and the strut seat is disposed on the placing surface.

12. The warehousing shelving unit according to claim 11, wherein the strut seat has at least one connecting portion configured to connect with the placing surface.

13. The warehousing shelving unit according to claim 11, wherein the strut seat is fixedly mounted on the placing surface.

14. The warehousing shelving unit according to claim 11, wherein the strut is disposed vertically.

15. The warehousing shelving unit according to any one of claims 1 to 14, wherein the track assembly further comprises at least one limiting member, and the limiting member is located at an end of the extension section away from the shelving unit body.

16. The warehousing shelving unit according to claim 15, wherein the track assembly further comprises at least one buffer member, the buffer member is disposed on the limiting member, and the buffer member faces the shelving unit body.

17. The warehousing shelving unit according to claim 16, wherein the buffer member comprises a collision block and an elastic telescopic portion, and the collision block is connected to the limiting member through the elastic telescopic portion.

18. The warehousing shelving unit according to any one of claims 2 to 14, wherein a length of the extension section of the first track is equal to that of the extension section of the second track.

19. The warehousing shelving unit according to any one of claims 2 to 14, wherein the first track is provided with two extension sections, and the two extension sections of the first track are respectively located at two ends of a connecting section of the first track; and
the second track is provided with two extension sections, and the two extension sections of the second track are respectively located at two ends of the connecting section of the second track.

20. The warehousing shelving unit according to any one of claims 1 to 12, further comprising a guardrail, wherein the guardrail is connected to the shelving unit body, and the guardrail is disposed around an outer side of the maintenance area.

21. The warehousing shelving unit according to claim 20, wherein the guardrail has a doorway; and a door is arranged on the doorway to open or close the doorway.

22. A warehousing system, comprising a conveyor line and the warehousing shelving unit according to any one of claims 1 to 21, wherein the conveyor line is located on a side of at least one extension section of the warehousing shelving unit.
